# FASCICULE DE BREVET EUROPEEN

(11) **EP 3 213 993 B1**
(45) Date de publication et mention de la délivrance du brevet: **06.06.2018**
(21) Numéro de dépôt: 17154155.0
(22) Date de dépôt: 01.02.2017
(51) Int. Cl.: B64C 25/56, B64C 25/32

(54) **AERONEF MUNI D'UN SYSTEME DE FLOTTABILITE, ET PROCEDE DE FLOTTABILITE**
LUFTFAHRZEUG, DAS MIT EINEM AUFTRIEBSSYSTEM AUSGESTATTET IST, UND AUFTRIEBSVERFAHREN
AN AIRCRAFT PROVIDED WITH A BUOYANCY SYSTEM, AND A BUOYANCY METHOD

(30) Priorité: 03.03.2016 FR 1600364
(43) Date de publication de la demande: 06.09.2017
(73) Titulaire: Airbus Helicopters, 13725 Marignane Cedex (FR)
(72) Inventeur: AZZARELLO, Julien, 13001 MARSEILLE (FR)
(74) Mandataire: GPI & Associés

(56) Documents cités:
- FR-A1- 2 994 686
- JP-A- H0 463 800
- US-A- 3 321 158
- US-A1- 2010 044 506

## Description

La présente invention concerne un aéronef muni d'un système de flottabilité, ainsi qu'un procédé de flottabilité.

Dès lors, l'invention se situe dans le domaine technique des systèmes de flottabilité permettant l'amerrissage et la stabilité à flot d'un aéronef, et plus particulièrement un aéronef à voilure tournante.

Un tel système de flottabilité participe à la flottaison et à la stabilité d'un aéronef suite à un amerrissage. Le système de flottabilité peut être utilisé par exemple suite à un amerrissage forcé, pour permettre l'évacuation des occupants de cet aéronef. Tous les appareils voués aux missions de transport de personnes en zones maritimes sont équipés en principe d'un tel système de flottabilité.

Des règlements aéronautiques de certification précisent d'ailleurs qu'un aéronef doit pouvoir amerrir et être stable sur l'eau avec son système de flottabilité. La stabilité doit être avérée pour des états de surface libre de l'eau et des niveaux de vent qui sont définis dans ces règlements de certification.

Ces états de surface libre de l'eau sont aussi nommés « état de mer », et s'appliquent à toute surface liquide. Le terme « amerrissage » couvre ainsi le posé d'un aéronef sur toute surface libre d'eau, que ce soit sur la mer ou sur un lac par exemple. Des règlements de certification requièrent la stabilité d'un aéronef avec un état de mer particulier.

Un système de flottabilité peut comprendre des flotteurs.

Les flotteurs sont fixés de part et d'autre d'une cellule de l'aéronef. Le terme « cellule » désigne une partie de l'aéronef logeant un poste de pilotage, voire une cabine et une soute.

Par exemple, des flotteurs sont fixés dans une partie inférieure de l'aéronef. Les flotteurs sont alors éventuellement fixés à un train d'atterrissage portant la cellule, ou encore à une paroi extérieure de la cellule.

Certains systèmes de flottaison comprennent des flotteurs gonflables dont le déploiement est commandé soit par le pilote et/ou le copilote par exemple, soit par un déclenchement automatique notamment grâce à un ou des détecteur(s) d'immersion. Ces flotteurs peuvent comprendre par exemple des outres gonflées par un moyen de déploiement.

Par ailleurs, les flotteurs peuvent être appariés pour optimiser la stabilité de l'aéronef sur l'eau. Dès lors, les flotteurs d'une paire peuvent être disposés de part et d'autre de la cellule de l'aéronef.

Un tel système de flottaison donne satisfaction pour assurer la stabilité de l'aéronef avec un état de mer de niveau 4 notamment.

Cependant, sur une mer extrêmement agitée présentant un état de mer très supérieur à l'état de mer requis par les règlements de certification ou sous l'action d'une vague présentant une intensité élevée, des flotteurs peuvent s'enfoncer sous la surface liquide lorsque l'aéronef présente un angle de roulis très important.

Si le centre de gravité de l'aéronef ne se trouve plus au droit d'un espace séparant deux flotteurs d'une paire de flotteurs, l'aéronef peut chavirer.

Le document US 2013/0327890 présente un hélicoptère muni de flotteurs portés par des ailettes. Ce flotteurs sont sensiblement agencés à mi-hauteur de l'hélicoptère, et notamment sensiblement à mi-hauteur de la cabine conformément à la figure 2c de ce document US 2013/0327890.

Pour limiter les risques de chavirement, les flotteurs peuvent être reliés à une cellule par un moyen élastique. Le document US 2015/0217862 présente un aéronef de ce type.

Le document FR 2 994 686 propose de lier des flotteurs à un fuselage par un dispositif de liaison autorisant un déplacement transversal de chaque flotteur par rapport au fuselage.

Les documents FR 3011817 et FR 3017107 sont aussi connus.

Les documents JP H04 63800, US 2010/044506 et US 3321158 sont aussi connus.

La présente invention a alors pour objet de proposer un aéronef présentant une stabilité optimisée suite à un amerrissage.

Selon l'invention, un aéronef est muni d'une cellule qui s'étend longitudinalement le long d'un plan antéropostérieur, la cellule s'étendant transversalement d'un côté gauche vers un côté droit et en élévation d'un fond vers un sommet.

L'aéronef comprend un système de flottabilité, ce système de flottabilité étant pourvu d'au moins une paire de deux flotteurs, deux flotteurs distincts d'une paire étant disposés transversalement de part et d'autre du plan antéropostérieur.

Chaque flotteur est mobile en élévation d'une position inférieure vers une position supérieure, le centre de gravité de chaque flotteur étant présent dans un plan supérieur perpendiculaire au plan antéropostérieur dans la position supérieure et dans un plan inférieur dans la position inférieure, le plan inférieur étant parallèle au plan supérieur et étant situé sous le plan supérieur lorsque l'aéronef présente un angle de roulis nul, le système de flottabilité comprenant pour chaque flotteur un système de blocage pour bloquer par défaut chaque flotteur dans la position inférieure et pour bloquer dans une condition prédéterminée les flotteurs présents d'un unique côté de l'aéronef dans la position supérieure.

L'expression « dans une condition prédéterminée » signifie que tous les flotteurs présents du côté gauche ou que tous les flotteurs présents du coté droit sont libérés pour atteindre leurs positions supérieures lorsqu'une condition prédéterminée survient.

L'expression « système de blocage » désigne un système apte à bloquer chaque flotteur dans une position inférieure ou dans une position supérieure en fonction de la condition prédéterminée.

L'expression « flotteurs présents d'un unique côté » fait référence soit aux flotteurs présents du côté gauche de l'aéronef soit aux flotteurs présents du côté droit de l'aéronef.

Par conséquent, l'aéronef est pourvu d'au moins une paire de flotteurs. Les flotteurs peuvent prendre la forme de flotteurs structuraux ou gonflables. Dans le cadre de flotteurs gonflables, les flotteurs peuvent être gonflés avant, pendant ou après l'amerrissage en appliquant les procédés de déploiement usuels.

Quelle que soit la nature des flotteurs et leur mode de gonflement le cas échéant, les flotteurs sont tous maintenus dans leur position inférieure suite à l'amerrissage. L'aéronef se comporte alors à flot sensiblement de la même manière qu'un aéronef conventionnel. L'aéronef se trouve dans une position dite par commodité « position conventionnelle ».

Par contre, lorsque la condition prédéterminée survient, le système de blocage libère chaque flotteur présent du coté gauche de l'aéronef ou chaque flotteur présent du côté droit de l'aéronef. Les flotteurs qui sont libérés par le système de blocage sont dits « flotteurs libérés » par commodité. Chaque flotteur libéré se déplace alors pour atteindre sa position supérieure. Par exemple, la poussée d'Archimède exerce un effort sur chaque flotteur libéré permettant le déplacement de ces flotteurs libérés en élévation le long de la cellule.

Le système de blocage bloque alors chaque flotteur libéré dans sa position supérieure pour rendre irréversible le déplacement de ce flotteur libéré, du moins sans intervention humaine.

Le déplacement de chaque flotteur présent d'un unique côté de l'aéronef induit le basculement en roulis de l'aéronef. L'aéronef s'incline vers le côté de l'aéronef portant les flotteurs libérés qui sont en position supérieure.

L'aéronef se trouve ainsi dans une position plus stable sur l'eau dite par commodité « position de stabilisation maximale ».

En outre, le déplacement de chaque flotteur libéré s'effectue progressivement. Par suite, le basculement de l'aéronef de la position conventionnelle vers la position de stabilisation maximale s'effectue sans à-coup, ce qui peut tendre à limiter le stress des occupants de l'aéronef.

Par ailleurs, dans la position de stabilisation maximale, l'aéronef présente un angle de roulis non nul, mais n'est pas renversé totalement. Par suite, un volume de la cabine occupé par des individus peut rester hors de l'eau pour permettre la respiration des occupants.

Pour profiter de cet aspect, les positions supérieures de chaque flotteur peuvent être étudiées pour maintenir la tête de chaque occupant assis sur un siège hors de l'eau, du moins à partir d'une taille limite d'un occupant et en l'absence de chavirement.

En outre, même si l'aéronef se retourne en présence d'un état de mer particulièrement sévère, l'aéronef présentera néanmoins une inclinaison tendant à maintenir une poche d'air au sein de la cabine.

Le déplacement de chaque flotteur présent uniquement d'un même coté de l'aéronef n'a rien d'évident. En effet, ce déplacement induit une augmentation de l'angle de roulis de l'aéronef ce qui ne parait pas raisonnable car une partie de la cabine est alors immergée.

Toutefois, la demanderesse note que la stabilité de l'aéronef sur l'eau est alors maximale. De plus, cette inclinaison en roulis permet de maintenir une partie de la cabine en dehors de l'eau pour permettre la respiration des occupants de l'aéronef.

L'aéronef peut de plus comporter une ou plusieurs des caractéristiques qui suivent.

Par exemple, la cellule s'étendant en élévation d'une partie inférieure incluant le fond vers une partie supérieure incluant le sommet, la position inférieure est située dans la partie inférieure de l'aéronef alors que la position supérieure peut être située dans la partie supérieure de l'aéronef.

Par suite, un flotteur dans sa position inférieure est alors situé au niveau de la partie inférieure. Lorsque l'angle de roulis de l'aéronef est nul, le flotteur est situé sous un plan médian séparant la partie inférieure de la partie supérieure, ce plan médian étant un plan qui est perpendiculaire au plan antéropostérieur et qui est défini par un axe transversal et un axe en élévation de l'aéronef.

Par contre, le flotteur est situé au niveau de la partie supérieure dans sa position supérieure. Lorsque l'angle de roulis de l'aéronef est nul, le flotteur est alors situé au dessus du plan médian.

Par ailleurs, le système de flottabilité peut être muni pour chaque flotteur d'au moins un coulisseau monté coulissant par rapport à un rail, chaque rail s'étendant en élévation, de la partie inférieure vers la partie supérieure, chaque coulisseau étant attaché à un flotteur correspondant.

Chaque flotteur est mobile en élévation d'une position inférieure vers une position supérieure par coulissement de chaque coulisseau fixé au flotteur le long d'un rail

Le système de blocage peut comporter alors des verrous pour bloquer le coulisseau par rapport au rail correspondant.

Chaque coulisseau peut prendre la forme d'une ferrure portant au moins une roulette qui coulisse dans un rail. Le coulisseau peut alors se déplacer le long du rail pour permettre le déplacement du flotteur.

Eventuellement, le système de flottabilité est muni pour chaque flotteur de deux coulisseaux montés coulissant respectivement par rapport à deux rails, chaque rail s'étendant en élévation, de la partie inférieure vers la partie supérieure, chaque coulisseau étant attaché à un flotteur correspondant.

Dès lors, les rails peuvent par exemple être installés dans un encadrement de porte.

Par ailleurs, le système de blocage peut comporter au moins un verrou dit « verrou inférieur » destiné à maintenir un flotteur dans la position inférieure, le système de blocage comportant au moins un verrou dit « verrou supérieur » destiné à maintenir un flotteur dans la position supérieure, le système de blocage comprenant une unité de traitement reliée à un système d'activation, l'unité de traitement commandant chaque verrou inférieur pour permettre le déplacement d'un flotteur de la position inférieure vers la position supérieure sur requête du système d'activation, le verrou supérieur ayant pour fonction de rendre ledit déplacement irréversible sans action manuelle d'un individu sur chaque verrou supérieur.

L'expression « unité de traitement » désigne un système apte à commander au moins un verrou pour ouvrir ou fermer ce verrou.

L'expression « système d'activation » désigne un système apte à un générer un signal transmis à l'unité de traitement pour indiquer qu'au moins un verrou doit être ouvert.

Suite à l'amerrissage, les verrous inférieurs maintiennent chaque flotteur dans sa position inférieure.

Dès qu'une condition prédéterminée survient, le système d'activation envoie un signal à l'unité de traitement qui ouvre les verrous inférieurs présents d'un côté de l'aéronef. Chaque flotteur associé à un verrou ouvert est alors libéré, et se déplace vers sa position supérieure. Au moins un verrou supérieur bloque alors le flotteur dans sa position supérieure.

En outre, une condition prédéterminée peut survenir lorsqu'un ordre de déplacement de chaque flotteur présent d'un côté de l'aéronef est donné par un pilote.

Le terme « pilote » est à interpréter au sens large en faisant référence à un individu, et par exemple un individu présent dans l'aéronef.

Dès lors, le système d'activation comporte un organe de commande manoeuvrable par un pilote permettant à un pilote de choisir de maintenir chaque flotteur dans sa position inférieure ou de permettre le déplacement de chaque flotteur présent d'un unique côté de l'aéronef vers sa position supérieure.

Une condition prédéterminée peut survenir lorsque l'aéronef atteint un angle de roulis seuil. Dès lors, le système d'activation comporte un système de mesure qui mesure un angle de roulis de l'aéronef.

Ce système de mesure communique avec l'unité de traitement pour requérir le déplacement d'au moins un flotteur dès qu'un angle de roulis seuil est atteint.

Par ailleurs, au moins un verrou peut comporter un clapet rotatif articulé à la cellule afin d'effectuer une rotation pour saillir d'un revêtement de l'aéronef dans une position de blocage afin de bloquer le flotteur ou pour être escamoté au moins partiellement dans ledit revêtement dans une position de déblocage pour débloquer le flotteur.

Un tel verrou s'avère relativement simple et léger.

Le clapet rotatif peut être muni d'une face inclinée et d'une face plane, la face inclinée présentant une première inclinaison aigue par rapport à une direction d'extension de déplacement du flotteur de la position inférieure à la position supérieure, la face plane présentant une deuxième inclinaison par rapport à la direction d'extension qui est supérieure à la première inclinaison.

La face plane peut être sensiblement perpendiculaire à la direction de déplacement.

En outre, un verrou peut comporter un ressort exerçant un effort sur le clapet pour tendre à maintenir le clapet dans la position de blocage.

Par ailleurs, le clapet peut comporter une butée pour stopper une rotation du clapet de la position de déblocage vers la position de blocage lorsque cette position de blocage est atteinte.

Pour pouvoir être ouvert sur requête par un pilote, un verrou peut en outre comporter un organe d'immobilisation électrique coopérant par interférence de formes avec le clapet pour empêcher ou autoriser une rotation du clapet sur requête d'une unité de traitement.

L'organe d'immobilisation peut par exemple comprendre une gâche électrique ou encore un loquet pouvant être déplacé par un moyen fonctionnant électriquement.

Selon un autre aspect, lorsque l'aéronef comporte des hublots, un flotteur peut être situé au moins partiellement sous un hublot dans la position inférieure et au moins partiellement au dessus du hublot dans la position supérieure pour ne pas obturer totalement ledit hublot.

L'expression « située sous un hublot » signifie que le flotteur comporte une section saillant sous le hublot de manière à ne pas obturer totalement le hublot. De même, l'expression « située au dessus du hublot » signifie que le flotteur comporte une section saillant au dessus du hublot de manière à ne pas obturer totalement le hublot.

Par suite, le hublot n'est pas totalement obturé par un flotteur lorsque ce flotteur est dans sa position inférieure ou sa position supérieure. Le hublot peut alors être utilisé en tant qu'issue de secours.

Outre un aéronef, l'invention vise un procédé appliqué par cet aéronef.

L'invention vise donc un procédé de flottabilité pour faire flotter un aéronef muni d'une cellule qui s'étend longitudinalement le long d'un plan antéropostérieur, la cellule s'étendant transversalement d'un côté gauche vers un côté droit et en élévation d'un fond vers un sommet, l'aéronef comprenant un système de flottabilité, le système de flottabilité étant pourvu d'au moins une paire de flotteurs, deux flotteurs extérieurs d'une paire étant disposés transversalement de part et d'autre dudit plan antéropostérieur à l'extérieur de la cellule.

Selon ce procédé :
- chaque flotteur d'une paire est rendu mobile en élévation d'une position inférieure vers une position supérieure, chaque flotteur étant attaché à au moins un coulisseau (45) qui est rendu coulissant par rapport à un rail (41) pour permettre le déplacement du flotteur de la position inférieure vers la position supérieure,
- on maintient chaque flotteur par défaut dans une position inférieure, et
- lorsqu'une condition prédéterminée survient, on dispose tous les flotteurs présents d'un unique côté de l'aéronef dans la position supérieure.

En particulier, on peut disposer les flotteurs présents d'un unique côté de l'aéronef dans la position supérieure sur requête d'un pilote ou lorsqu'un angle de roulis de l'aéronef atteint un seuil prédéfini.

Dans des conditions de mer calme, les flotteurs peuvent rester dans une position inférieure.

L'invention et ses avantages apparaîtront avec plus de détails dans le cadre de la description qui suit avec des exemples donnés à titre illustratif en référence aux figures annexées qui représentent :
- la figure 1, un schéma présentant un aéronef muni d'un système de flottabilité selon l'invention,
- les figures 2 et 3, des vues transversales schématiques de cet aéronef illustrant respectivement des flotteurs dans une position inférieure et dans une position supérieure,
- les figures 4 et 5, des figures illustrant un flotteur coopérant avec un coulisseau et un rail,
- les figures 6 à 8, des schémas illustrant des verrous aptes à maintenir un flotteur dans une position,
- les figures 9 à 11, des schémas explicitant le fonctionnement de l'invention.

On note que trois directions X, Y et Z orthogonales les unes par rapport aux autres sont représentées sur les figures.

La première direction X est dite longitudinale. Le terme « longitudinal » est relatif à toute direction sensiblement parallèle à la première direction X.

La deuxième direction Y est dite transversale. Le terme « transversal » est relatif à toute direction sensiblement parallèle à la deuxième direction Y.

Enfin, la troisième direction Z est dite en élévation. L'expression « en élévation » est relative à toute direction sensiblement parallèle à la troisième direction Z.

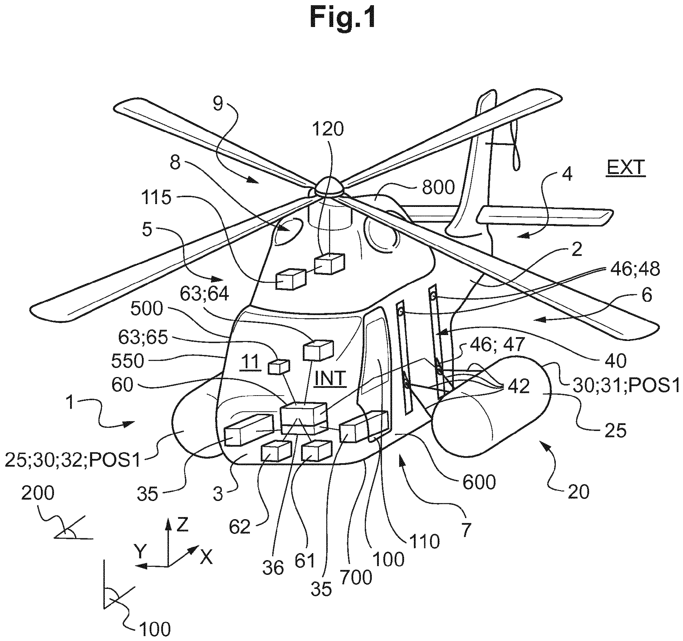

La figure 1 présente un aéronef 1. Cet aéronef peut notamment être un giravion.

Cet aéronef 1 comprend une cellule 2 s'étendant longitudinalement d'une extrémité avant 3 vers une extrémité arrière 4 le long d'un plan antéropostérieur 100. Eventuellement, le plan antéropostérieur est un plan de symétrie de l'aéronef.

De plus, la cellule 2 s'étend transversalement d'un côté gauche 5 vers un côté droit 6 de part et d'autre du plan antéropostérieur 100. Par suite, la cellule 2 comporte un revêtement extérieur dénommé plus simplement « revêtement 550 » qui matérialise un flanc gauche 600 de la cellule et un flanc droit 500 de la cellule.

Dans ce contexte, le terme « gauche » désigne les parties de l'aéronef présentes du côté gauche 5 de l'aéronef, et le terme « droit » désigne les parties de l'aéronef présentes du côté droit 6 de cet aéronef. Le terme « gauche » désigne donc les parties de l'aéronef présentes à gauche 5 du plan antéropostérieur 100, et le terme « droit » désigne les parties de l'aéronef présentes à droite de ce plan antéropostérieur 100.

Par ailleurs, la cellule s'étend en élévation d'un fond 700 d'une partie inférieure 7 de la cellule vers un sommet 800 d'une partie supérieure 8.

La partie inférieure 7 est classiquement munie d'un atterrisseur, alors que la partie supérieure 8 peut porter un rotor 9 participant à la sustentation voire à la propulsion de l'aéronef. La partie inférieure peut inclure une barque délimitée notamment par le plancher d'un espace interne et les revêtements de la cellule.

La partie supérieure peut donc porter un rotor 9 dans le cadre d'un giravion. Ce rotor 9 est mis en rotation par au moins un moteur 115 au travers d'une boîte de transmission de puissance 120. Ce moteur 115 peut être un turbomoteur muni d'une turbine de détente solidaire d'un arbre de travail, l'arbre de travail étant relié par une chaîne mécanique à la boîte de transmission de puissance 120.

La partie inférieure peut alors représenter la moitié inférieure de la cellule alors que la partie supérieure représente la moitié supérieure de cette cellule.

Par ailleurs, l'intérieur INT de la cellule 2 comporte des espaces internes creux qui sont délimités par le revêtement 550 et diverses cloisons. Chaque espace interne représente alors un compartiment qui s'étend notamment en élévation d'une base dite « plancher » par commodité vers un plafond. Eventuellement, le plafond d'un compartiment peut représenter le plancher d'un autre compartiment.

En outre, cet aéronef 1 est de plus pourvu d'un système de flottabilité 20 selon l'invention afin de pouvoir amerrir.

Un tel système de flottabilité peut comporter un système insufflant de l'air dans la cellule suite à un amerrissage. Un tel système peut comprendre au moins une pompe aspirant de l'air à l'extérieur de l'aéronef pour réinjecter cet air dans la cellule. La cellule peut être étanche à l'air notamment dans sa partie basse pour constituer une poche étanche à l'air.

En outre, le système de flottabilité 20 est pourvu d'au moins une paire de flotteurs 25.

Chaque paire de flotteurs comporte deux flotteurs 25 agencés transversalement de part et d'autre de la cellule 2 de l'aéronef. Les flotteurs 25 d'une paire de flotteurs sont alors disposés de part et d'autre du plan antéropostérieur 100, et par exemple à l'extérieur EXT de la cellule 2. L'expression « disposé à l'extérieur EXT de la cellule 2 » signifie que les flotteurs sont au moins partiellement déployés en dehors de la cellule 2 suite à un amerrissage.

Ainsi, un flotteur 25 dit « flotteur 31 » est disposé du côté gauche 5 de l'aéronef, alors qu'un flotteur 25 dit « flotteur droit 32» est disposé du côté droit 6 de l'aéronef.

Les flotteurs 25 d'une paire peuvent être disposés symétriquement de part et d'autre du plan antéropostérieur 100 de symétrie de l'aéronef dans une position stable de l'aéronef.

Par exemple, l'aéronef comporte une voire deux paires de flotteurs 25.

Par ailleurs, chaque flotteur 25 peut comprendre une enveloppe 30 qui flotte sur l'eau, cette enveloppe emprisonnant un gaz par exemple. La longueur de l'enveloppe représente alors une dimension de cette enveloppe selon une direction longitudinale, la largeur de l'enveloppe représente une dimension de cette enveloppe selon une direction transversale, et l'épaisseur de l'enveloppe représente une dimension de cette enveloppe selon une direction en élévation.

Cette enveloppe 30 peut être une enveloppe structurale réalisée en matériaux composites, métalliques, plastiques...

Toutefois, l'enveloppe 30 peut être une outre gonflable.

Dès lors, au moins un flotteur 25 est gonflable. Eventuellement, tous les flotteurs 25 sont gonflables. Dès lors, les flotteurs gonflables sont dégonflés en dehors des phases d'amerrissage. Les flotteurs gonflables peuvent notamment être pliés dans un espace prévu à cet effet avant gonflage.

Dans ces conditions, le système de flottabilité comprend un système de gonflage pour gonfler chaque flotteur gonflable. Ce système de gonflage comporte au moins un gonfleur 35 pour gonfler les flotteurs gonflables. Chaque gonfleur peut comporter un gonfleur électrique, explosif, pneumatique ou chimique ..

Par exemple mais non exclusivement, un gonfleur 35 est relié à une pluralité de flotteurs 25. La figure 1 illustre à l'inverse un système de gonflage comprenant plusieurs gonfleurs 35. Eventuellement, le système de gonflage comporte au moins un gonfleur 35 par flotteur.

On peut se référer à l'état de la technique pour trouver des exemples de réalisation des flotteurs gonflables et de systèmes de gonflage de ces flotteurs.

De plus, le système de flottabilité est pourvu d'au moins un système de commande 36 pour commander les gonfleurs 35. Ce système de commande 36 est alors relié à au moins un gonfleur 35 pour requérir le gonflage des flotteurs 25.

Le système de commande 36 peut être un système usuel.

Ce système de commande peut toutefois comporter un calculateur possédant par exemple un processeur, un circuit intégré, un système programmable, un circuit logique, ces exemples ne limitant pas la portée donnée au terme « calculateur ».

Ce calculateur peut être éventuellement armé par un moyen d'activation 37 manoeuvrable par un individu. Le moyen d'activation peut posséder au moins une position permettant de rendre actif le système de flottabilité. Ainsi, le système de flottabilité peut être inhibé dans certaines situations, par exemple lorsque l'aéronef ne survole pas une surface liquide.

La calculateur peut déterminer si des conditions de gonflage prédéterminées sont remplies, et peut activer le cas échéant les gonfleurs 35. Par exemple, un moyen de sélection 61 commandable par un individu permet de transmettre au calculateur un ordre de gonflage des flotteurs extérieurs et/ou intérieurs. L'expression « moyen de sélection» peut désigner un bouton, un écran tactile, un moyen de commande vocal, un clavier ou un pointeur permettant de manipuler des moyens informatiques...

De même, au moins un capteur d'immersion 62 peut permettre de détecter la présence d'eau, et transmet le cas échéant au calculateur un ordre de gonflage des flotteurs.

D'autres systèmes connus peuvent être utilisés pour gonfler les flotteurs, par exemple en fonction du vecteur vitesse sol de l'aéronef.

Indépendamment de la nature des flotteurs, chaque flotteur 25 est mobile en élévation en étant fixé à un système de guidage en élévation.

Le système de guidage d'un flotteur peut être un système guidant éventuellement les flotteurs en rotation et/ou en translation.

Le système de guidage d'un flotteur peut ainsi être un système de guidage en translation qui comporte au moins un rail 41 fixé à un revêtement 550 de la cellule, chaque rail 41 coopérant avec un coulisseau 45. Par exemple, chaque flotteur 25 est alors relié à au moins un coulisseau 45 par des ralingues 42 ou des ferrures par exemple.

Dès lors, chaque flotteur 25 peut effectuer une translation en élévation d'une position dite « position inférieure POS1 » visible sur la figure 1 vers une position dite « position supérieure POS2 » qui n'est pas visible sur cette figure 1.

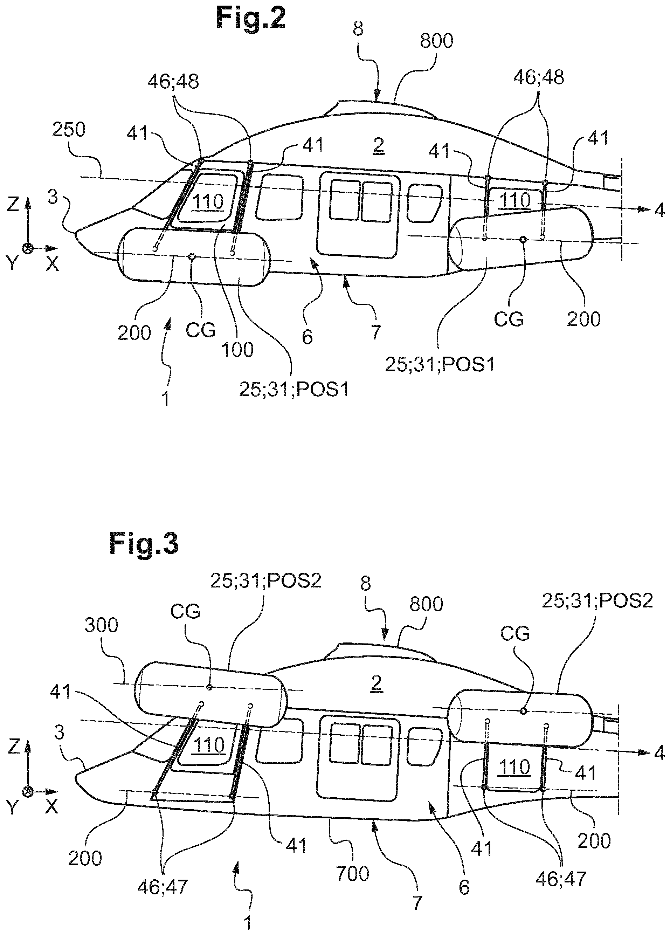

La figure 2 illustre un aéronef muni de deux paires de flotteurs. Seuls les flotteurs gauches 31 présents du côté gauche 6 de l'aéronef sont visibles.

Chaque flotteur 25 est alors relié à la cellule par au moins un coulisseau coopérant avec un rail. En particulier, la figure 2 présente des flotteurs 25 reliés à deux coulisseaux en prise respectivement avec deux rails 41. Les deux rails peuvent alors être agencés longitudinalement de part et d'autre des encadrements de portes, voire de hublots 110.

Dans la position inférieure POS1, chaque flotteur présente un centre de gravite CG sensiblement localisé dans la partie inférieure 7 de l'aéronef. Ce centre de gravité CG est alors contenu dans un plan inférieur 200 horizontal qui est perpendiculaire au plan antéropostérieur 100 et à la pesanteur lorsque l'aéronef repose sur le sol. Chaque plan inférieur 200 est alors situé sous un plan médian 250 séparant en élévation la portion inférieure 7 et la portion supérieur 8.

Dans sa position inférieure POS1, un flotteur 25 est éventuellement situé au moins partiellement sous un hublot 110 pour ne pas obturer ce hublot.

La figure 3 illustre des flotteurs 25 dans leurs positions supérieures POS2.

Dans la position supérieure POS2, chaque flotteur présente un centre de gravite CG sensiblement localisé dans la partie supérieure 8 de l'aéronef. Ce centre de gravité est alors contenu dans un plan supérieur 300 horizontal parallèle au plan inférieur 200 de ce flotteur. Dès lors, le plan supérieur 300 surplombe le plan inférieur 200.

Dans sa position supérieure POS2, un flotteur 25 est éventuellement situé au moins partiellement au dessus d'un hublot 110 pour ne pas obturer ce hublot.

Par suite, le système de flottabilité comporte des flotteurs qui peuvent se déplacer en translation d'une position inférieure POS1 vers une position supérieure POS2

Le déplacement des flotteurs n'est toutefois possible que dans certaines conditions prédéterminées.

Dès lors et en référence à la figure 1, le système de flottabilité 20 comprend pour chaque flotteur 25 un système de blocage 40. Le système de blocage 40 a pour fonction de bloquer par défaut chaque flotteur 25 dans la position inférieure POS1. De plus, le système de blocage 40 a pour fonction de débloquer dans une condition prédéterminée chaque flotteur présent d'un unique côté de l'aéronef 1 afin de le bloquer dans sa position supérieure POS2.

Lorsque cette condition prédéterminée survient, chaque flotteur gauche 31 ou chaque flotteur droit 32 est alors libéré pour atteindre sa position supérieure POS2.

En référence à la figure 1, le système de blocage 40 comporte un verrou 46 dit « verrou inférieur 47 » par rail 41 destiné à maintenir un flotteur 25 dans la position inférieure POS1. Chaque verrou inférieur 47 peut être verrouillé dans une position de blocage et déverrouillé à distance.

De même, le système de blocage 40 comporte au moins un verrou 46 dit « verrou supérieur 48 » destiné à maintenir un flotteur 25 dans la position supérieure POS2.

En outre, le système de blocage 40 comprend une unité de traitement 60 reliée à un système d'activation 63. L'unité de traitement 60 communique alors avec chaque verrou inférieur 47 pour permettre le déplacement d'un flotteur 25 de la position inférieure POS1 vers la position supérieure POS2 sur requête du système d'activation 63.

Ce déplacement est irréversible sans action manuelle d'un individu sur chaque verrou supérieur 48.

Dès lors, l'unité de traitement 60 peut posséder par exemple un processeur, un circuit intégré, un système programmable, un circuit logique, ces exemples ne limitant pas la portée donnée à l'expression « unité de traitement».

L'unité de traitement 60 et le système de commande 36 précités peuvent représenter une seule et même unité électronique. Une telle unité électronique peut comporter au moins un processeur ou équivalent et une mémoire, des segments de code mémorisés dans la mémoire appartenant à l'unité de traitement et des segments de code mémorisés dans la mémoire.

Par ailleurs, le système d'activation 63 peut comporter un organe de commande 64, manoeuvrable par un pilote, relié à l'unité de traitement 60. Cet organe de commande 64 permet à un pilote soit de maintenir chaque flotteur 25 dans sa position inférieure POS1 soit de permettre le déplacement de chaque flotteur 25 présent d'un unique côté de l'aéronef 1 vers sa position supérieure POS2.

Par exemple, l'organe de commande 64 est un bouton rotatif à trois positions permettant respectivement de maintenir les flotteurs dans leurs positions inférieures, de permettre le déplacement des flotteurs gauches dans leurs positions supérieures, ou de permettre le déplacement des flotteurs droits dans leurs positions supérieures.

La manoeuvre de l'organe de commande 64 représente alors une condition prédéterminée permettant la translation de certains flotteurs.

De manière complémentaire ou alternative, le système d'activation 63 peut comporter un système de mesure 65 qui mesure un angle de roulis ROL de l'aéronef 1. Le système de mesure 65 peut comporter un inclinomètre ou encore une centrale inertielle par exemple.

Le système de mesure 65 transmet alors un signal représentatif de cet angle de roulis à l'unité de traitement.

Si un angle de roulis seuil supérieur ou inférieur est atteint, l'unité de traitement peut permettre la translation de certains flotteurs.

La détection de la présence d'un tel angle de roulis représente alors une condition prédéterminée permettant la translation de certains flotteurs.

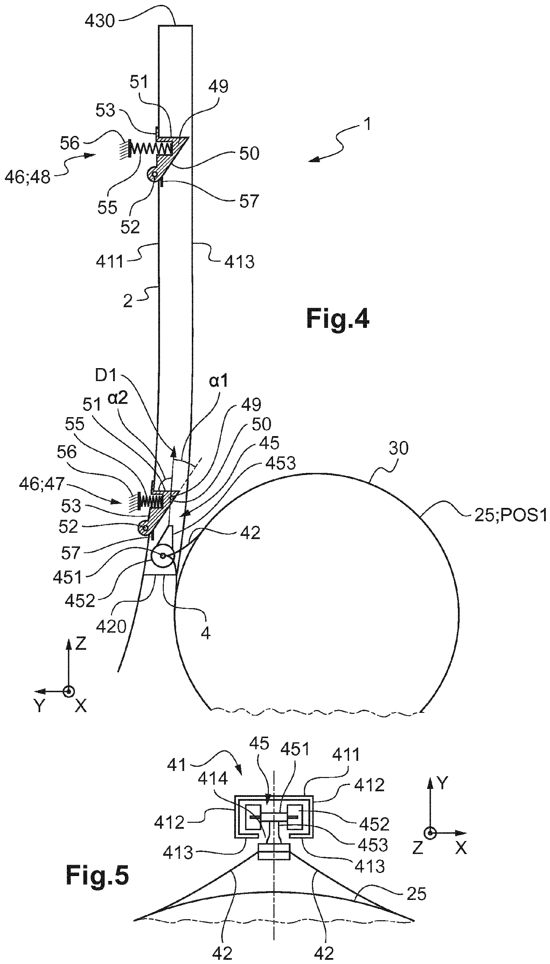

Les figures 4 à 8 détaillent la réalisation d'un système de blocage 40.

En référence à la figure 4, un flotteur 25 est relié à la cellule 2 par au moins un rail 41. L'enveloppe 30 du flotteur 25 est alors fixée à un coulisseau 45 par des ralingues 42.

En référence à la figure 5, un rail 41 peut être un rail en forme de C. Un tel rail présente une paroi de fond 411 solidarisée à la cellule. De plus, le rail comporte deux parois latérales 412 s'étendant chacune à partir de la paroi de fond 411 pour atteindre un rebord 413. Les deux rebords 413 sont sensiblement parallèles à la paroi de fond, et sont séparés l'un de l'autre par un espace vide 414.

Le coulisseau 45 comprend alors une tige 451 portant au moins une roue 452, voire les ralingues 42. Par exemple, la tige 451 porte deux roues 452, chaque roue 452 étend disposée transversalement entre la paroi de fond 411 et un rebord 413. Le coulisseau comporte aussi une plaque de contact 453 solidaire de la tige 451 pour coopérer avec chaque verrou par interférence de forme.

En référence à la figure 4, le rail présente en outre une paroi de butée inférieure 420 bloquant la translation vers le bas du coulisseau 45, et une paroi de butée supérieure 430 bloquant la translation vers le haut du coulisseau 45.

Par ailleurs, un verrou 46 dit « verrou inférieur 47 » et un verrou dit « verrou supérieur 48 » sont agencés dans le rail ou à proximité du rail pour bloquer le coulisseau respectivement dans une position inférieure ou une position supérieure.

Au moins un verrou 46 voire chaque verrou 46 d'un système de blocage comporte un clapet 49. Ce clapet est mobile en rotation autour d'un axe longitudinal par rapport au revêtement de la cellule. Ainsi, chaque clapet peut effectuer une rotation pour saillir d'un revêtement 550 de l'aéronef 1 dans une position de blocage POS3 visible sur la figure 4 afin de bloquer le flotteur 25, ou pour être escamoté au moins partiellement dans le revêtement 550 dans une position de déblocage pour débloquer le flotteur.

Ce clapet 49 comporte une plaque ou équivalent ayant sensiblement une forme de triangle.

Ce clapet est alors muni d'une face verticale 53, d'une face inclinée 50 et d'une face plane 51. Le clapet est de plus articulé à la cellule par une articulation 52 présente au niveau de la jonction de la face verticale et de la face inclinée.

Cette face inclinée 50 présente une première inclinaison α1 aigüe par rapport à une direction d'extension D1 de déplacement du flotteur 25. Dès lors, la face plane 51 présente une deuxième inclinaison α2 par rapport à la direction d'extension D1 supérieure à la première inclinaison α1. Par exemple la deuxième inclinaison est sensiblement égale à 90 degrés lorsque le clapet saille en dehors du revêtement.

La première inclinaison de la face inclinée a alors pour fonction d'engendrer la rotation du clapet par interférence de formes avec le coulisseau lorsqu'une condition prédéterminée est remplie. A l'inverse, la deuxième inclinaison tend à empêcher le coulisseau de retourner vers sa position initiale.

En outre, le verrou 46 comporte un ressort 55 exerçant un effort sur le clapet 49 pour tendre à maintenir le clapet 49 dans la position de blocage POS3. Ce ressort peut s'étendre entre une cloison fixe 56 de l'aéronef et la face verticale 53 du clapet.

Par ailleurs, le clapet 49 peut posséder une butée 57 pour stopper une rotation du clapet 49 de la position de déblocage vers la position de blocage POS3 lorsque la position de blocage POS3 est atteinte. La butée peut par exemple entrer à cet effet en contact avec la paroi de fond du rail, un rebord du rail, voire avec le revêtement 550 de la cellule.

Par ailleurs, un verrou 46 et notamment un verrou inférieur 47 peut comporter un organe d'immobilisation 58 électrique. Cet organe d'immobilisation est par exemple relié à l'unité de traitement 60 pour empêcher ou autoriser une rotation du clapet 49.

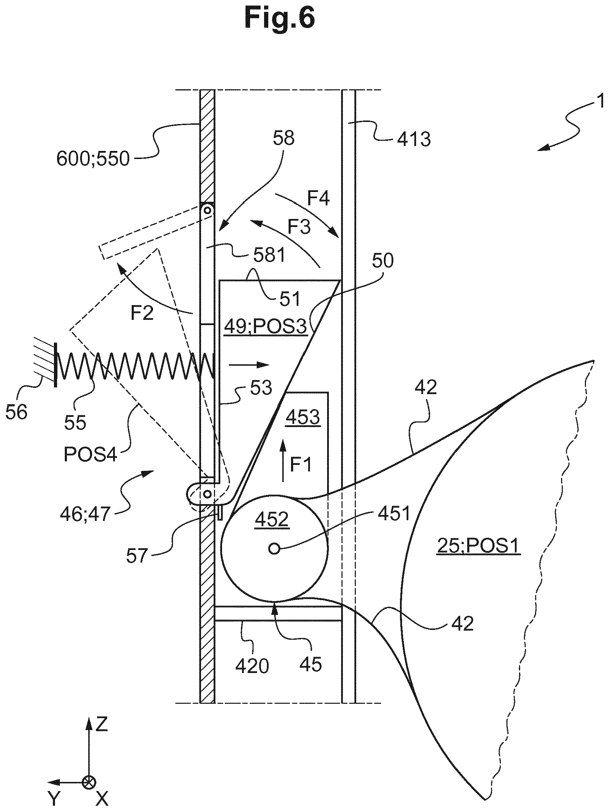

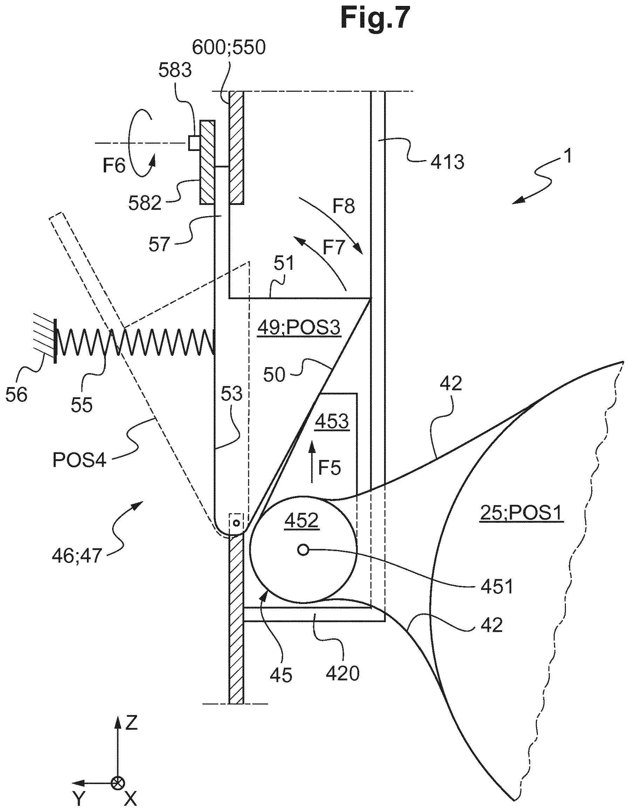

Les figures 6 et 7 présentent des réalisations d'un verrou inférieur 46.

Selon la réalisation de la figure 6, l'organe d'immobilisation prend la forme d'une gâche électrique 581 mobile en rotation. La gâche électrique est alors articulée au revêtement 550 de la cellule.

Suite à un amerrissage, la poussée exercée par l'eau sur le flotteur tend à induire une translation du coulisseau selon la flèche F1. Le coulisseau entre alors en contact avec la face inclinée du clapet 49.

Toutefois, dans la position représentée en traits pleins, la gâche électrique empêche alors la rotation du clapet. Le clapet est ainsi maintenu dans sa position de blocage.

Par suite, lorsque le coulisseau et le flotteur 25 se trouvent dans leurs positions inférieures, le coulisseau est bloqué entre la paroi de butée inférieure 420 et le clapet du verrou inférieur 47.

Si une condition prédéterminée survient, l'unité de traitement autorise la rotation de la gâche électrique, par exemple en alimentant électriquement cette gâche électrique.

Par suite, la gâche électrique 581 effectue une rotation F2 en raison de l'effort exercé par le clapet sur cette gâche. Le clapet effectue en parallèle une rotation F3 pour atteindre la position de déblocage POS4 représentée en traits en pointillés en comprimant le ressort 55. Ce clapet est ainsi au moins partiellement escamoté dans la cellule.

Dès lors, le clapet n'entrave plus la translation du coulisseau 45. Le coulisseau 45 et le flotteur 25 se déplacent alors en translation le long du rail 41.

Lorsque le coulisseau n'est plus en contact avec le clapet, le ressort 55 exerce un effort sur ce clapet qui tend à ramener le clapet dans sa position de blocage POS3 au travers d'une rotation F4. Quelle que soit la liberté de mouvement offerte à la gâche électrique, le coulisseau ne peut alors plus retourner vers la position inférieure, du moins sans intervention humaine.

Selon la réalisation de la figure 7, l'organe d'immobilisation prend la forme d'un loquet 582 mobile en rotation. Le loquet 582 est alors porté par un moteur 583 fixé au revêtement 550 de la cellule par exemple.

Ce loquet a pour fonction de coincer une butée 57 du clapet, par exemple contre le revêtement 550 de la cellule.

Suite à un amerrissage, la poussée exercée par l'eau sur le flotteur tend à induire une translation du coulisseau selon la flèche F5. Le coulisseau entre alors en contact avec la face inclinée 50 du clapet.

Toutefois, dans la position représentée en traits pleins, le loquet 582 empêche alors la rotation du clapet. Le clapet est ainsi maintenu dans sa position de blocage POS3.

Par suite, lorsque le coulisseau et le flotteur 25 se trouvent dans leurs positions inférieures, le coulisseau est bloqué entre la paroi de butée inférieure 420 et le clapet du verrou inférieur 47.

Si une condition prédéterminée survient, l'unité de traitement ordonne la rotation F6 du loquet 582, par exemple en alimentant électriquement le moteur 583.

Le clapet effectue en parallèle une rotation F7 pour atteindre alors la position de déblocage POS4 représentée en traits en pointillés en comprimant le ressort 55. Ce clapet est ainsi au moins partiellement escamoté dans la cellule.

Dès lors, le clapet n'entrave plus la translation du coulisseau. Le coulisseau et le flotteur 25 se déplacent alors en translation le long du rail 41.

Lorsque le coulisseau n'est plus en contact avec le clapet, le ressort 55 exerce un effort sur ce clapet qui tend à ramener le clapet dans sa position de blocage POS3 au travers d'une rotation F8. Le coulisseau ne peut alors plus retourner vers la position inférieure, du moins sans intervention humaine.

Indépendamment de la réalisation du verrou inférieur, lorsque le coulisseau est libéré par le verrou inférieur, la poussée d'Archimède exercée sur le flotteur et l'enfoncement de l'aéronef dans l'eau induisent conjointement le déplacement du coulisseau le long du rail.

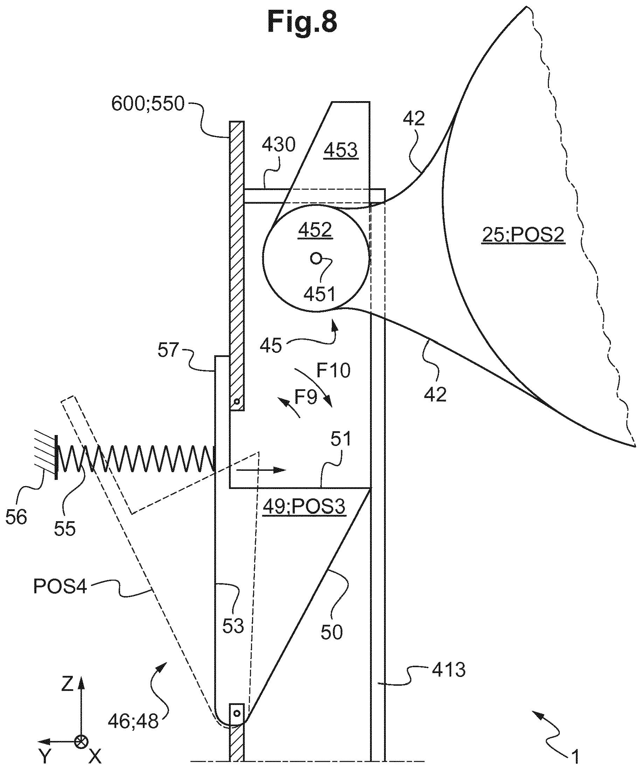

En référence à la figure 8, le coulisseau 45 atteint par suite le verrou supérieur 48.

Le coulisseau 45 exerce alors un effort sur le clapet 49 du verrou supérieur 48. Le clapet 49 effectue une rotation F9 pour atteindre alors la position de déblocage POS4 représentée en traits en pointillés en comprimant le ressort 55. Ce clapet 49 est ainsi au moins partiellement escamoté dans la cellule.

Dès lors, le clapet 49 n'entrave plus la translation du coulisseau. Le coulisseau et le flotteur 25 se déplacent alors en translation le long du rail 41 jusqu'à la paroi de butée supérieure 430.

Lorsque le coulisseau 45 n'est plus en contact avec le clapet 49, le ressort 55 exerce un effort sur ce clapet 49 qui tend à ramener le clapet dans sa position de blocage POS3 au travers d'une rotation F10. Le coulisseau ne peut alors plus retourner vers la position inférieure, du moins sans intervention humaine sur le clapet 49.

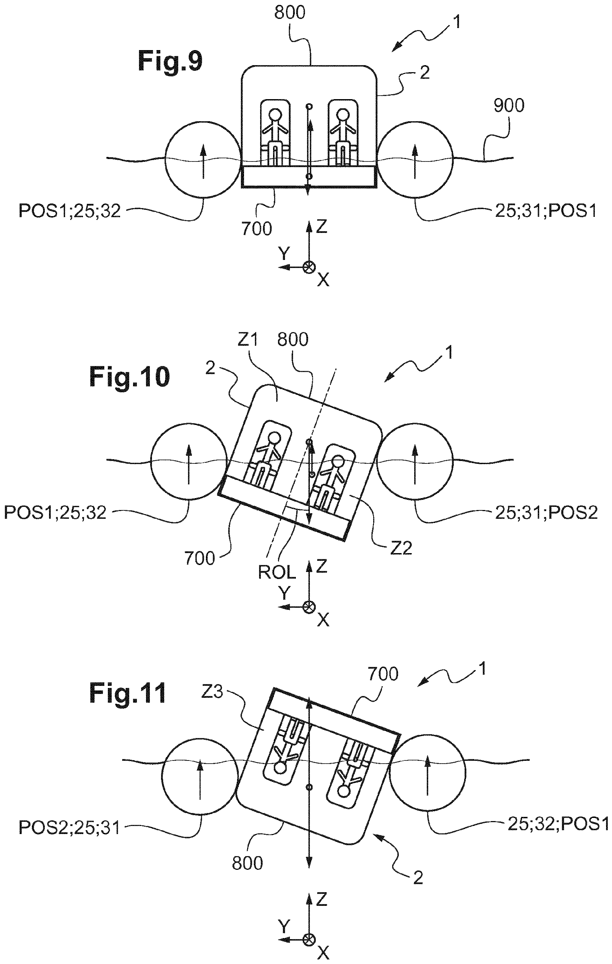

Les figures 9 à 11 illustrent le procédé mis en oeuvre par l'invention.

En référence à la figure 9, lorsqu'un aéronef 1 amerrit sur une surface liquide 900, les flotteurs 25 sont déployés pour assurer le maintien à flot de l'aéronef 1.

Dans le cadre de flotteurs gonflables, les flotteurs 25 peuvent être gonflés en vol préalablement à l'amerrissage, ou après l'amerrissage.

Chaque flotteur 25 est alors dans sa position inférieure POS1.

Si la mer est par exemple agitée et en référence à la figure 10, le système d'activation peut requérir le déplacement de chaque flotteur présent d'un unique côté de l'aéronef vers sa position supérieure.

Par exemple, le pilote ou un système de mesure d'un angle de roulis permettent de requérir un tel déplacement.

Selon l'exemple de la figure 10, chaque flotteur gauche 31 est libéré pour permettre son déplacement vers sa position supérieure.

Le déplacement des flotteurs gauches induit une augmentation de l'angle de roulis ROL de l'aéronef ce qui ne parait pas raisonnable car une partie de la cabine Z2 est alors immergée.

Toutefois, la demanderesse note que la stabilité de l'aéronef sur l'aéronef est alors maximale.

De plus, cette inclinaison en roulis permet de maintenir une zone Z1 de la cabine en dehors de l'eau

En référence à la figure 11, si l'aéronef se retourne, cet aéronef peut encore présenter une stabilité intéressante. En outre, une partie de la cabine Z3 est toujours en dehors de l'eau. Les occupants de l'aéronef peuvent alors se détacher de leurs sièges pour permettre leur respiration.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les figures décrivent un aéronef munis de flotteurs gauches et droits susceptibles de se déplacer en translation. Néanmoins, selon une variante, seuls les flotteurs présents d'un côté donné peuvent se déplacer. Cette variante tend à alléger l'aéronef.

## Revendications

1. Aéronef (1) muni d'une cellule (2) qui s'étend longitudinalement le long d'un plan antéropostérieur (100), ladite cellule (2) s'étendant transversalement d'un côté gauche (5) vers un côté droit (6) et en élévation d'un fond (700) vers un sommet (800), ledit aéronef comprenant un système de flottabilité (20), le système de flottabilité (20) étant pourvu d'au moins une paire de deux flotteurs (25), deux flotteurs (25) distincts d'une paire étant disposés transversalement de part et d'autre dudit plan antéropostérieur (100),
**caractérisé en ce que**, ledit système de flottabilité (20) étant muni pour chaque flotteur (25) d'au moins un coulisseau (45) monté coulissant par rapport à un rail (41), chaque rail (41) s'étendant en élévation, chaque coulisseau (45) étant attaché à un flotteur (25) correspondant, chaque flotteur (25) est mobile en élévation d'une position inférieure (POS1) vers une position supérieure (POS2) par coulissement de chaque coulisseau fixé au flotteur le long d'un rail, un centre de gravité (CG) de chaque flotteur (25) étant présent dans un plan supérieur (300) perpendiculaire au plan antéropostérieur (100) dans la position supérieure (POS2) et dans un plan inférieur (200) dans la position inférieure (POS1), le plan inférieur (200) étant parallèle au plan supérieur (300) et étant situé sous le plan supérieur (300) lorsque l'aéronef (1) présente un angle de roulis (ROL) nul, ledit système de flottabilité (20) comprenant pour chaque flotteur (25) un système de blocage (40) pour bloquer par défaut chaque flotteur (25) dans la position inférieure (POS1) et pour bloquer dans une condition prédéterminée les flotteurs présents d'un unique côté de l'aéronef (1) dans la position supérieure (POS2).

2. Aéronef selon la revendication 1,
**caractérisé en ce que**, ladite cellule (2) s'étendant en élévation d'une partie inférieure (7) munie dudit fond (700) vers une partie supérieure (8) munie dudit sommet (800), ladite position inférieure (POS1) est située dans une partie inférieure (7) de l'aéronef, ladite position supérieure (POS2) étant située dans la partie supérieure (8) de l'aéronef.

3. Aéronef selon l'une quelconque des revendications 1 à 2,
**caractérisé en ce que** ledit système de flottabilité (20) est muni pour chaque flotteur (25) de deux coulisseaux (45) montés coulissant respectivement par rapport à deux rails (41), chaque rail (41) s'étendant en élévation, chaque coulisseau (45) étant attaché à un flotteur (25) correspondant.

4. Aéronef selon l'une quelconque des revendications 1 à 3,
**caractérisé en ce que** ledit système de blocage (40) comporte au moins un verrou (46) dit « verrou inférieur (47) » destiné à maintenir un flotteur (25) dans la position inférieure (POS1), ledit système de blocage (40) comportant au moins un verrou (46) dit « verrou supérieur (48) » destiné à maintenir un flotteur (25) dans la position supérieure (POS2), ledit système de blocage (40) comprenant une unité de traitement (60) reliée à un système d'activation (63), ladite unité de traitement (60) commandant au moins chaque verrou inférieur (47) pour permettre le déplacement d'un flotteur (25) de la position inférieure (POS1) vers la position supérieure (POS2) sur requête du système d'activation (63), ledit verrou supérieur ayant pour fonction de rendre ledit déplacement irréversible sans action manuelle d'un individu sur chaque verrou supérieur (48).

5. Aéronef selon la revendication 4,
**caractérisé en ce que** ledit système d'activation (63) comporte un organe de commande (64) manoeuvrable par un pilote permettant à un pilote de choisir de maintenir chaque flotteur (25) dans sa position inférieure (POS1) ou de permettre le déplacement de chaque flotteur (25) présent d'un unique côté de l'aéronef (1) vers sa position supérieure (POS2).

6. Aéronef selon l'une quelconque des revendications 4 à 5,
**caractérisé en ce que** ledit système d'activation (63) comporte un système de mesure (65) qui mesure un angle de roulis (ROL) de l'aéronef (1).

7. Aéronef selon l'une quelconque des revendications 4 à 6,
**caractérisé en ce qu'**au moins un verrou (46) comporte un clapet (49) rotatif articulé à la cellule (2) afin d'effectuer une rotation pour saillir d'un revêtement (550) de l'aéronef (1) dans une position de blocage (POS3) afin de bloquer le flotteur (25) ou pour être escamoté au moins partiellement dans ledit revêtement (550) dans une position de déblocage (POS4) pour débloquer le flotteur (25).

8. Aéronef selon la revendication 7,
**caractérisé en ce que** le clapet (49) rotatif est muni d'une face inclinée (50) et d'un face plane (51), la face inclinée (50) présentant un première inclinaison (α1) aigüe par rapport à une direction d'extension (D1) de déplacement du flotteur (25) de la position inférieure (POS1) à la position supérieure (POS2), la face plane (51) présentant une deuxième inclinaison (α2) par rapport à la direction d'extension (D1) supérieure à la première inclinaison (α1).

9. Aéronef selon l'une quelconque des revendications 7 à 8, **caractérisé en ce que** ledit verrou (46) comporte un ressort (55) exerçant un effort sur le clapet (49) pour tendre à maintenir le clapet (49) dans la position de blocage (POS3).

10. Aéronef selon l'une quelconque des revendications 7 à 9,
**caractérisé en ce que** ledit clapet (49) comporte une butée (57) pour stopper une rotation du clapet (49) de la position de déblocage (POS4) vers la position de blocage (POS3) lorsque cette position de blocage (POS3) est atteinte.

11. Aéronef selon l'une quelconque des revendications 7 à 10,
**caractérisé en ce que** ledit verrou (46) comporte un organe d'immobilisation (58) électrique coopérant par interférence de formes avec ledit clapet (49) pour empêcher ou autoriser une rotation du clapet (49) sur requête d'une unité de traitement (60).

12. Aéronef selon l'une quelconque des revendications 1 à 11,
**caractérisé en ce que** ledit aéronef (1) comporte des hublots (110), un flotteur (25) étant situé au moins partiellement sous un hublot (110) dans la position inférieure (POS1) et au moins partiellement au dessus du hublot (110) dans la position supérieure (POS2) pour ne pas obturer totalement ledit hublot (110).

13. Procédé de flottabilité pour faire flotter un aéronef (1) muni d'une cellule (2) qui s'étend longitudinalement le long d'un plan antéropostérieur (100), ladite cellule (2) s'étendant transversalement d'un côté gauche (5) vers un côté droit (6) et en élévation d'un fond (700) vers un sommet (800), ledit aéronef (1) comprenant un système de flottabilité (20), le système de flottabilité (20) étant pourvu d'au moins une paire de flotteurs (25), deux flotteurs extérieurs d'une paire étant disposés transversalement de part et d'autre dudit plan antéropostérieur (100) à l'extérieur (EXT) de la cellule (2),
**caractérisé en ce que** ledit aéronef (1) est un aéronef (1) selon l'une quelconque des revendications 1 à 12 et **en ce que** le procédé comporte les étapes suivantes:
- chaque flotteur (25) d'une paire est rendu mobile en élévation d'une position inférieure (POS1) vers une position supérieure (POS2), chaque flotteur étant attaché à au moins un coulisseau (45) qui est rendu coulissant par rapport à un rail (41) pour permettre le déplacement du flotteur de la position inférieure vers la position supérieure
- on maintient chaque flotteur (25) par défaut dans une position inférieure (POS1), et
- lorsqu'une condition prédéterminée survient, on dispose tous les flotteurs (25) présents d'un unique côté de l'aéronef dans la position supérieure (POS2).

14. Procédé de flottabilité selon la revendication 13,
**caractérisé en ce que** le procédé comporte l'étape suivante: on dispose les flotteurs (25) présents d'un unique côté de l'aéronef dans la position supérieure (POS2) sur requête d'un pilote ou lorsqu'un angle de roulis (ROL) de l'aéronef (1) atteint un seuil prédéfini.

## Patentansprüche

1. Luftfahrzeug (1) mit einer Kabine (2), die sich in Längsrichtung entlang einer anteroposterioren Ebene (100) erstreckt, wobei die Kabine (2) sich in Querrichtung von einer linken Seite (5) zu einer rechten Seite (6) und in der Höhe von einem Boden (700) zu einem Scheitel (800) erstreckt, wobei das Luftfahrzeug ein Auftriebssystem (20) aufweist, wobei das Auftriebssystem (20) mit mindestens einem Paar von zwei Schwimmern (25) versehen ist, wobei zwei getrennte Schwimmer (25) eines Paares in Querrichtung auf der einen und der anderen Seite der anteroposterioren Ebene (100) angeordnet sind,
**dadurch gekennzeichnet, dass** das Auftriebssystem (20) für jeden Schwimmer (25) mit mindestens einem Gleitstück (45) versehen ist, das relativ zu einer Schiene (41) gleitend montiert ist, wobei jede Schiene (41) sich in die Höhe erstreckt, wobei jedes Gleitstück (45) an einem entsprechenden Schwimmer (25) befestigt ist, wobei jeder Schwimmer (25) in der Höhe beweglich ist von einer unteren Stellung (POS1) bis zu einer oberen Stellung (POS2) durch Gleiten eines jeden Gleitstücks, welches an dem Schwimmer befestigt ist, entlang einer Schiene, wobei ein Schwerpunkt (CG) eines jeden Schwimmers (25) in einer oberen Ebene (300) liegt, die senkrecht zu der anteroposterioren Ebene (100) in der oberen Stellung (POS2) liegt, und in einer unteren Ebene (200) in der unteren Stellung (POS1), wobei die untere Ebene (200) parallel zu der oberen Ebene (300) verläuft und unter der oberen Ebene (300) gelegen ist, wenn das Luftfahrzeug (1) einen Rollwinkel (ROL) gleich Null aufweist, wobei das Auftriebssystem (20) für jeden Schwimmer (25) ein Blockiersystem (40) aufweist, um standardmäßig jeden Schwimmer (25) in der unteren Stellung (POS1) zu blockieren und um in einer vorbestimmten Situation die nur auf einer Seite des Luftfahrzeugs (1) vorhandenen Schwimmer in der oberen Stellung (POS2) zu blockieren.

2. Luftfahrzeug nach Anspruch 1,
**dadurch gekennzeichnet, dass** die Kabine (2) sich in der Höhe von einem unteren Bereich (7), der mit dem Boden (700) versehen ist, bis zu einem oberen Bereich (8), der mit dem Scheitel (800) versehen ist, erstreckt, wobei die untere Stellung (POS1) in einem unteren Bereich (7) des Luftfahrzeugs gelegen ist, und die obere Stellung (POS2) in dem oberen Bereich (8) des Luftfahrzeugs gelegen ist.

3. Luftfahrzeug nach einem der Ansprüche 1 bis 2,
**dadurch gekennzeichnet, dass** das Auftriebssystem (20) für jeden Schwimmer (25) mit zwei Gleitstücken (45) versehen ist, die jeweils relativ zu zwei Schienen (41) gleitend montiert sind, wobei sich jede Schiene (41) in die Höhe erstreckt, wobei jedes Gleitstück (45) an einem entsprechenden Schwimmer (25) befestigt ist.

4. Luftfahrzeug nach einem der Ansprüche 1 bis 3,
**dadurch gekennzeichnet, dass** das Blockiersystem (40) mindestens einen "unterer Sperrriegel (47)" genannten Sperrriegel (46) aufweist, der dazu bestimmt ist, einen Schwimmer (25) in der unteren Stellung (POS1) zu halten, wobei das Blockiersystem (40) mindestens einen "oberer Sperrriegel (48)" genannten Sperrriegel (46) aufweist, der dazu bestimmt ist, einen Schwimmer (25) in der oberen Stellung (POS2) zu halten, wobei das Blockiersystem (40) eine Verarbeitungseinheit (60) aufweist, die mit einem Aktivierungssystem (63) verbunden ist, wobei die Verarbeitungseinheit (60) mindestens jeden unteren Sperrriegel (47) steuert, um die Bewegung eines Schwimmers (25) aus der unteren Stellung (POS1) in die obere Stellung (POS2) auf Anforderung des Aktivierungssystems (63) zu erlauben, wobei der obere Sperrriegel die Funktion hat, die Bewegung irreversibel zu gestalten, ohne manuelle Einwirkung einer Person auf jeden oberen Sperrriegel (48).

5. Luftfahrzeug nach Anspruch 4,
**dadurch gekennzeichnet, dass** das Aktivierungssystem (63) ein Steuerelement (64) aufweist, das von einem Piloten betätigbar ist, welches es einem Piloten erlaubt zu wählen, entweder jeden Schwimmer (25) in seiner unteren Stellung (POS1) zu halten, oder die Bewegung eines jeden Schwimmers (25), der auf einer einzigen Seite des Luftfahrzeugs (1) vorhanden ist, in seine obere Stellung (POS2) zu erlauben.

6. Luftfahrzeug nach einem der Ansprüche 4 bis 5,
**dadurch gekennzeichnet, dass** das Aktivierungssystem (63) ein Messsystem (65) aufweist, welches einen Rollwinkel (ROL) des Luftfahrzeugs (1) misst.

7. Luftfahrzeug nach einem der Ansprüche 4 bis 6,
**dadurch gekennzeichnet, dass** mindestens ein Sperrriegel (46) eine drehbare Klappe (49) aufweist, die an der Kabine (2) angelenkt ist, um ein Drehung auszuführen, um gegenüber einer Außenhaut (550) des Luftfahrzeug (1) in einer Blockierstellung (POS3) vorzustehen, um den Schwimmer (25) zu blockieren oder um mindestens teilweise in die Außenhaut (55) in einer Entriegelungsstellung (POS4) eingeklappt zu sein, um den Schwimmer (25) zu entriegeln.

8. Luftfahrzeug nach Anspruch 7,
**dadurch gekennzeichnet, dass** die drehbare Klappe (49) mit einer geneigten Fläche (50) und einer ebenen Fläche (51) versehen ist, wobei die geneigte Fläche (50) eine erste spitzwinklige Neigung (α1) relativ zu einer Erstreckungsrichtung (D1) der Bewegung des Schwimmers (25) aus der unteren Stellung (POS1) in die obere Stellung (POS2) aufweist, wobei die ebene Fläche (51) eine zweite Neigung (α2) relativ zu einer Erstreckungsrichtung (D1) aufweist, die größer als die erste Neigung (α1) ist.

9. Luftfahrzeug nach einem der Ansprüche 7 bis 8,
**dadurch gekennzeichnet, dass** der Sperrriegel (46) eine Feder (55) aufweist, die eine Kraft auf die Klappe (49) ausübt, um die Klappe (49) in der Blockadestellung (POS3) zu halten.

10. Luftfahrzeug nach einem der Ansprüche 7 bis 9,
**dadurch gekennzeichnet, dass** die Klappe (49) einen Anschlag (57) aufweist, um eine Drehung der Klappe (49) aus der Entriegelungsstellung (POS4) in die Blockadestellung (POS3) zu stoppen, wenn die Blockadestellung (POS3) erreicht ist.

11. Luftfahrzeug nach einem der Ansprüche 7 bis 10,
**dadurch gekennzeichnet, dass** der Sperrriegel (46) ein elektrisches Blockierelement (58) aufweist, das durch Formschluss mit der Klappe (49) zusammenwirkt, um eine Drehung der Klappe (49) auf Anforderung einer Verarbeitungseinheit (60) zu verhindern oder zu erlauben.

12. Luftfahrzeug nach einem der Ansprüche 1 bis 11,
**dadurch gekennzeichnet, dass** das Luftfahrzeug (1) Sichtfenster (110) aufweist, wobei ein Schwimmer (25) mindestens teilweise unter einem Sichtfenster (110) in der unteren Stellung (POS1) und zumindest teilweise oberhalb des Sichtfensters (110) in der oberen Stellung (POS2) angeordnet ist, um das Sichtfenster (110) nicht vollständig zu verdecken.

13. Auftriebsverfahren, um ein Luftfahrzeug (1) schwimmen zu lassen, welches mit einer Kabine (2) versehen ist, die sich in Längsrichtung entlang einer anteroposterioren Ebene (100) erstreckt, wobei die Kabine (2) sich in Querrichtung von einer linken Seite (5) zu einer rechten Seite (6) und in der Höhe von einem Boden (700) zu einem Scheitel (800) erstreckt, wobei das Luftfahrzeug (1) ein Auftriebssystem (20) aufweist, wobei das Auftriebssystem (20) mit mindestens einem Paar von Schwimmern (25) versehen ist, wobei zwei äußere Schwimmer eines Paares in Querrichtung auf der einen und der anderen Seite der anteroposterioren Ebene (100) außerhalb (EXT) der Kabine (2) angeordnet sind,
**dadurch gekennzeichnet, dass** das Luftfahrzeug (1) ein Luftfahrzeug (1) gemäß einem der Ansprüche 1 bis 12 ist, und
dadurch, dass das Verfahren folgende Schritte aufweist:
- jeder Schwimmer (25) eines Paares wird in Höhenrichtung aus einer unteren Stellung (POS1) in eine obere Stellung (POS2) beweglich gemacht, wobei jeder Schwimmer an mindestens einem Gleitstück (45) befestigt ist, das gleitend relativ zu einer Schiene (41) ausgebildet ist, um die Bewegung des Schwimmers aus der unteren Stellung in die obere Stellung zu erlauben,
- jeder Schwimmer (25) standardmäßig in einer unteren Stellung (POS1) gehalten wird, und
- wenn eine vorbestimmte Situation auftritt, alle auf einer Seite des Luftfahrzeug vorhandenen Schwimmer (25) in der oberen Stellung (POS2) angeordnet werden.

14. Auftriebsverfahren nach Anspruch 13,
**dadurch gekennzeichnet, dass** das Verfahren folgenden Schritt aufweist:
die Schwimmer (25) auf einer einzigen Seite des Luftfahrzeugs werden in der oberen Stellung (POS2) auf Anforderung eines Piloten angeordnet, wenn der Rollwinkel (ROL) des Luftfahrzeugs (1) einen vordefinierten Schwellenwert erreicht.

## Claims

1. An aircraft (1) provided with an airframe (2) which extends longitudinally along an anteroposterior plane (100), said airframe (2) extending transversely from a left-hand side (5) towards a right-hand side (6) and in elevation from a bottom (700) towards a top (800), said aircraft comprising a buoyancy system (20), the buoyancy system (20) being provided with at least one pair of two floats (25), two separate floats (25) of a pair being arranged transversely on either side of said anteroposterior plane (100),
**characterised in that**, said buoyancy system (20) being provided for each float (25) with at least one slide (45) which is mounted to slide relative to a rail (41), each rail (41) extending in elevation, each slide (45) being attached to a corresponding float (25), each float (25) is mobile in elevation from a lower position (POS1) towards an upper position (POS2) by each slide fastened to the float sliding along a rail, a centre of gravity (CG) of each float (25) being present in an upper plane (300) perpendicular to the anteroposterior plane (100) in the upper position (POS2) and in a lower plane (200) in the lower position (POS1), the lower plane (200) being parallel to the upper plane (300) and being located below the upper plane (300) when the aircraft (1) has a zero angle of roll (ROL), said buoyancy system (20) comprising for each float (25) a blocking system (40) for blocking, by default, each float (25) in the lower position (POS1) and for blocking the floats present on a single side of the aircraft (1) in the upper position (POS2) in a predetermined condition.

2. An aircraft according to Claim 1,
**characterised in that**, said airframe (2) extending in elevation from a lower portion (7) provided with said bottom (700) towards an upper portion (8) provided with said top (800), said lower position (POS1) is located in a lower portion (7) of the aircraft, said upper position (POS2) being located in the upper part (8) of the aircraft.

3. An aircraft according to any one of Claims 1 to 2,
**characterised in that** said buoyancy system (20) is provided, for each float (25), with two slides (45) mounted to slide respectively relative to two rails (41), each rail (41) extending in elevation, each slide (45) being attached to a corresponding float (25).

4. An aircraft according to any one of Claims 1 to 3,
**characterised in that** said blocking system (40) comprises at least one latch (46), referred to as "lower latch (47)", intended to hold a float (25) in the lower position (POS1), said blocking system (40) comprising at least one latch (46) [sic], referred to as "upper latch (48)", intended to hold a float (25) in the upper position (POS2), said blocking system (40) comprising a processing unit (60) linked to an activation system (63), said processing unit (60) controlling at least each lower latch (47) in order to permit the displacement of a float (25) from the lower position (POS1) towards the upper position (POS2) at the request of the activation system (63), said upper latch having the function of making said displacement irreversible without manual action by an individual on each upper latch (48).

5. An aircraft according to Claim 4,
**characterised in that** said activation system (63) comprises a control member (64) which can be operated by a pilot, enabling a pilot to choose to hold each float (25) in its lower position (POS1) or to permit the displacement of each float (25) present on a single side of the aircraft (1) towards its upper position (POS2).

6. An aircraft according to any one of Claims 4 to 5,
**characterised in that** said activation system (63) comprises a measurement system (65) which measures an angle of roll (ROL) of the aircraft (1).

7. An aircraft according to any one of Claims 4 to 6,
**characterised in that** at least one latch (46) comprises a rotary flap (49) articulated to the airframe (2) in order to effect rotation so as to protrude from a skin (550) of the aircraft (1) in a blocking position (POS3) in order to block the float (25) or so as to be retracted at least partially into said skin (550) in an unblocking position (POS4) in order to unblock the float (25).

8. An aircraft according to Claim 7,
**characterised in that** the rotary flap (49) is provided with an inclined face (50) and a planar face (51), the inclined face (50) having a first acute inclination (α1) relative to a direction of extension (D1) of displacement of the float (25) from the lower position (POS1) to the upper position (POS2), the planar face (51) having a second inclination (α2) relative to the direction of extension (D1) which is greater than the first inclination (α1).

9. An aircraft according to any one of Claims 7 to 8,
**characterised in that** said latch (46) comprises a spring (55) which exerts a force on the flap (49) in order to tend to hold the flap (49) in the blocking position (POS3).

10. An aircraft according to any one of Claims 7 to 9,
**characterised in that** said flap (49) comprises an abutment (57) for stopping rotation of the flap (49) from the unblocking position (POS4) towards the blocking position (POS3) when this blocking position (POS3) is reached.

11. An aircraft according to any one of Claims 7 to 10,
**characterised in that** said latch (46) comprises an electric locking member (58) cooperating by shape interference with said flap (49) in order to prevent or permit rotation of the flap (49) at the request of a processing unit (60).

12. An aircraft according to any one of Claims 1 to 11,
**characterised in that** said aircraft (1) comprises windows (110), a float (25) being located at least partially beneath a window (110) in the lower position (POS1) and at least partially above the window (110) in the upper position (POS2) in order not to mask said window (110) completely.

13. A buoyancy method for making an aircraft (1) which is provided with an airframe (2) which extends longitudinally along an anteroposterior plane (100) float, said airframe (2) extending transversely from a left-hand side (5) towards a right-hand side (6) and in elevation from a bottom (700) towards a top (800), said aircraft (1) comprising a buoyancy system (20), the buoyancy system (20) being provided with at least one pair of floats (25), two outer floats of a pair being arranged transversely on either side of said anteroposterior plane (100) on the outside (EXT) of the airframe (2),
**characterised in that** said aircraft (1) is an aircraft (1) according to any one of Claims 1 to 12
and **in that** the method comprises the following steps:
- each float (25) of a pair is made to be mobile in elevation from a lower position (POS1) towards an upper position (POS2), each float being attached to at least one slide (45) which is rendered sliding relative to a rail (41) in order to permit the displacement of the float from the lower position towards the upper position,
- each float (25) is held by default in a lower position (POS1), and
- when a predetermined condition occurs, all the floats (25) present on a single side of the aircraft are arranged in the upper position (POS2).

14. A buoyancy method according to Claim 13,
**characterised in that** the method comprises the following step:
the floats (25) present on a single side of the aircraft are arranged in the upper position (POS2) at the request of a pilot or when an angle of roll (ROL) of the aircraft (1) reaches a predefined threshold.
